(19)

Europäisches
Patentamt
European
Patent Office
Office européen
des brevets

(11)  **EP 2 854 331 A1**

(12)  **EUROPEAN PATENT APPLICATION**

(43) Date of publication:
01.04.2015  Bulletin 2015/14

(51) Int Cl.:
*H04L 9/32* (2006.01)    *H04L 29/06* (2006.01)

(21) Application number: **13186598.2**

(22) Date of filing: **30.09.2013**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME** | (71) Applicant: **Siemens Aktiengesellschaft**<br>**80333 München (DE)**<br><br>(72) Inventors:<br> • **Tödter, Kai**<br>  **85521 Ottobrunn (DE)**<br> • **Wolf, Timo, Dr.**<br>  **86949 Schöffelding (DE)** |

(54)  **Method and System for Authenticating a User of a Device**

(57)  The proposed method advantageously makes use of a standard HTTP authentication challenge methods in combination with standard encryption algorithms in order to arrive at a new challenge response method which is able to use existing application program interfaces (API) of current operating systems for mobile devices, including iOS developed by Apple Inc., Cupertino, California, United States of America.

The proposed method advantageously enables a two factorauthentication applying the protocol HTTPs by using a smart card. This advantageously facilitates a usage of existing PKI infrastructure on mobile devices.

FIG

EP 2 854 331 A1

**Description**

TECHNICAL FIELD

The present embodiments relate to a method and system for authenticating a user of a device. More specifically, the present embodiments relate to a method and system for authenticating a user of a device against a server by using credentials assigned to the user. The credentials include at least a public certificate and a private key. The credentials are stored by an authentication controller being at least temporarily interfaced to the device.

BACKGROUND

A considerable number of confidential applications require a two-factor authentication. The two factors are in general a HAVE, as having an authentication controller and a KNOW, as knowing a personal identification number or PIN in order to access the authentication controller.

An authentication controller refers to a functional device aiding an authentication of a user of a device before the device is operable, or in connection with the use of the device. Such authentication controllers, to be mentioned in this context, include so-called smart cards which typically include a processor, a memory and a connecting interface. The smart card is provided with software for processing inputs entered in the smart card and for generating responses. Although, below in this description, such authentication controllers will be primarily called smart cards, it is obvious that the embodiments are not limited to be used in smart cards only.

A number of companies have established a public key infrastructure, also referred to as PKI, wherein smart cards are operated for storing and providing credentials assigned to a specific user or group of users in order to authenticate the user or one member of the group of users.

These credentials may include data such as private certificates, public certificates, private keys and public keys, aiding to provide a two-factor authentication of the user.

SUMMARY

The usage of mobile devices proceeds apace, along with a demand for authenticating the users of such mobile devices. Business suppliers prefer a smart card authentication also for mobile devices in line with a corporate entitlement service. Although a variety of smart card readers, either integrated in the mobile device or connectable as an external accessory, are commonly available, some operating systems of mobile devices do not comply with this kind auf authentication. While supporting certificates being stored in the closer environment of the mobile device, a majority of operating systems executed on mobile devices are not able to handle certificates stored on external smart cards.

Accordingly, there is a need in the art for a method of authenticating a user of a device, which overcomes the defects of present operating systems in handling certificates stored on external smart cards, thereby preserving the security standards of smart card authentication procedures known from conventional desktop computers.

Systems and methods in accordance with various embodiments of the present invention provide for an authentication of a user of a device.

In one embodiment, a method for authenticating a user of a device against a server is disclosed, the method using credentials assigned to said user, said credentials including at least a public certificate and a private key, said credentials stored by an authentication controller being at least temporarily interfaced to said device, the method including the steps of:

a) receiving, by said device, an authentication request issued by said server, said authentication request at least including a challenge;
b) computing, by said device, a hash value of said challenge and transmitting said hash value to said authentication controller;
c) requesting, by said device, said authentication controller to compute a signature by signing said hash value with said private key and receiving said signature from said authentication controller;
d) composing, by said device, a first string by encoding said signature;
e) reading, by said device, said public key certificate from said authentication controller and composing a second string by encoding said public key certificate;
f) composing a response answering said authentication request, by using a response format including a string literal dedicated for a concatenation of a username string and a password string and inserting a concatenation of said first string and said second string into said string literal; and;
g) transmitting said response to said server.

According to an embodiment, a method for authenticating a user of a device against a server is disclosed, including the steps of:

> a) receiving, by said server, a response sent by said device, said response responsively sent to a preceding authentication request;
> b) identifying a string literal included in said response, said string literal dedicated for a concatenation of a username string and a password string;
> c) decomposing said string literal into a first string and a second string;
> d) extracting a hash value of a challenge, a public key certificate and a signature from one of said first string or second string;
> e) verifying said hash value, said public key certificate and said signature with respective credentials provided by the server; and;
> f) transmitting an authentication message to said device if said step of verifying delivers a positive result.

According to an embodiment, a device is proposed, the device supporting an authentication of a user against a server by using credentials assigned to said user, said credentials including at least a public certificate and a private key, said credentials stored by an authentication controller being at least temporarily interfaced to said device, the device including:

> a) means for receiving an authentication request issued by said server, said authentication request at least including a challenge;
> b) means for computing a hash value of said challenge and for transmitting said hash value to said authentication controller;
> c) means for requesting said authentication controller to compute a signature by signing said hash value with said private key and receiving said signature from said authentication controller;
> d) means for composing a first string by encoding said signature;
> e) means for reading said public key certificate from said authentication controller and for composing a second string by encoding said public key certificate;
> f) means for composing a response answering said authentication request, by using a response format including a string literal dedicated for a concatenation of a username string and a password string and inserting a concatenation of said first string and said second string into said string literal; and;
> g) means for transmitting said response to said server.

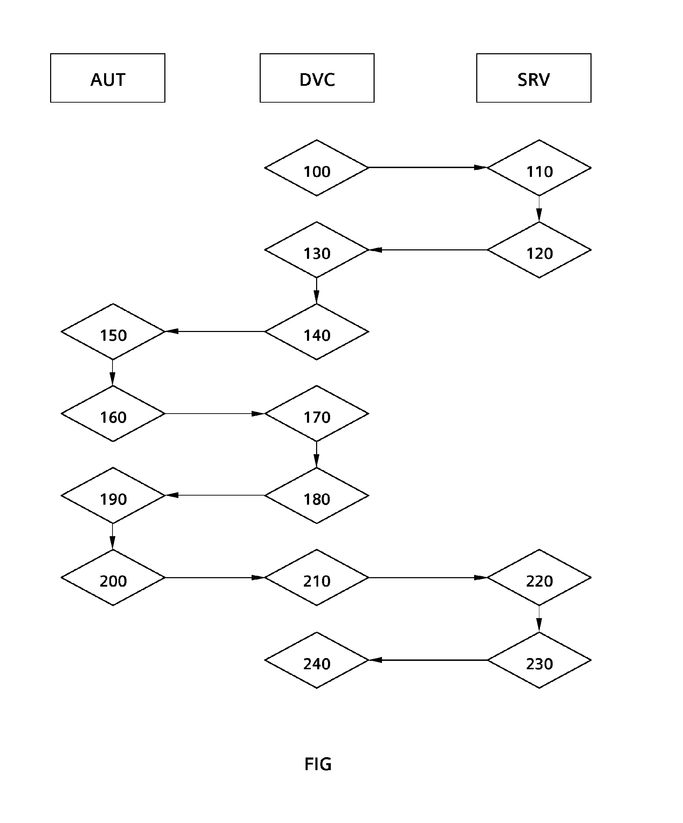

BRIEF DESCRIPTION OF THE DRAWING

The objects as well as further advantages of the present invention will become more apparent and readily appreciated from the following description of the preferred embodiments, taken in conjunction with the accompanying drawing accompanying drawing of which:

FIG.    shows flowchart of steps for authenticating a user of a device against a server according to an embodiment.

DETAILED DESCRIPTION

In FIG. a flowchart of steps for authenticating a user is depicted.

In order to securely exchange credentials stored on the smart card between the device DVC and the server, a secure HTTP (Hypertext Transfer Protocol) connection, or HTTPs connection, is established.

In a first step 100 a HTTPs connection is requested by the device, e.g. by requesting a HTTPs resource of the server SRV, which may be a secure web site.

In a subsequent step 110 the server SRV receives the device's request and computes a challenge, e.g. a random number with a length of 128 bytes.

In a subsequent step 120 the server SRV issues an authentication request. The request for authentication is demanded by a common HTTP(s) authentication challenge message, e.g. an HTTP basic authentication or an HTTP client certificate authentication. The authentication challenge message includes a string literal which is a concatenation of a realm string and a string containing a common character encoding of the challenge. An example of common character encoding is Base 64. The realm string contains a textual identifier of a specific realm, which may be used to identify a required authentication method. An exemplary identifier of a specific realm is »MobileCard«, requesting an authentication method using the smart card. The authentication challenge message sent to the device by step 120 has the following exemplary structure:

```
httpBasicAuthChallenge(realm=MobileCard + Base64(challenge))
```

In a subsequent step 130 the authentication request is received by the device DVC. The device DVC computes a hash value of the challenge included in the authentication request. Optionally, a seed e.g. a random number with a length of 128 bytes, is computed. The challenge and, optionally, the seed, are used for computing a hash value. Specifically, a string literal is composed by a concatenation of the received challenge and the seed. The SHA1 hash value of this string literal is computed by:

```
hash = SHA1(challenge | seed)
```

in order to receive the hash value.

In a subsequent step 140 the device DVC requests the smart card AUT to compute a signature by signing the hash value with a private key stored on the smart card AUT.

In step 150, the smart card receives this request and, in step 150, the signature is computed. In an embodiment, the signature is computed by applying a PKCS#1 algorithm. By accessing the smart card AUT, the user of the device DVC is prompted to enter a personal identification number, or PIN, assigned to the smart card AUT in order to release the step of accessing the smart card AUT. The private key cannot be read from the card, thus this operation or signing the hash value needs to be performed on the smart card AUT. The smart card AUT computes the signature by:

```
signature = Sign(PrivateKey, hash).
```

In step 170, this signature is received by the device DVC.

In a subsequent step 180 the device DVC composes a first string by a common character encoding of said signature. An example of common character encoding is Base 64. According to an embodiment, the seed is encoded by the common character encoding and concatenated with the encoded signature. The first string is composed by:

```
str1 = Base64(seed) "|" Base64(signature)
```

wherein the plaintext of the encoded seed, separated by a pre-defined character "|" is concatenated with the plaintext of encoded signature.

In a subsequent step 180 the device DVC reads from the smart card AUT, or, alternatively, requests the smart card AUT to read the public key certificate. The request is received by the smart card AUT in step 190. In step 200, the public key certificate is read by smart card and delivered to the device DVC.

In a subsequent step 210 the device DVC receives the public key certificate and composes a second string by a common character encoding the public key certificate. An example of common character encoding is Base 64. The second string is composed by:

```
str2 = Base64(pubCert).
```

A response answering said authentication request is composed, by using a response format including a string literal dedicated for a concatenation of a username string and a password string.

Thereby, a concatenation of the first string and the second string are inserted into the string literal dedicated for a concatenation of the username string and the password string.

In an embodiment, the second string is used for a username and the first string is used as a password and inserted in the string literal dedicated for a concatenation of a username string and a password string. Alternatively, the first and second string are inserted vice versa.

The response message is composed as message answering the common HTTP(s) authentication challenge according the authentication protocol.

In a subsequent step 220 the response is received by the server SRV.

The server SRV identifies the string literal included in said response, which is, according to the authentication protocol, dedicated for a concatenation of a username string and a password string. As the server SRV is adapted to the amended authentication protocol according to the proposed method, the following process steps, which are differing from the known authentication protocol, are executed according to an embodiment.

The identified string literal is decomposed into the first string and the second string. Thereon the hash value of the challenge, the public key certificate and the signature received by the device DVC are extracted. The server reconstructs the seed from the received first string by separating the first string at the special character "|", using the part preceding the special character and decoding the Base 64 coding by:

$$userSeed = prefix(str1, "|").$$

The seed reconstructed from the received first string is hereby denoted by »userSeed«.

The server then reconstructs the signature from the received first string by separating the received first string at the special character "|", using the subsequent part after the special character and decoding the Base 64 coding by:

$$userSignature = postfix(str1, "|").$$

The signature reconstructed from the received first string is hereby denoted by »userSignature«.

The server SRV has kept a copy of the challenge transmitted to the device DVC and computes the SHA1 hash from the received seed and the challenge by:

$$userHash = SHA1(challenge \mid userSeed)$$

The hash value computed by using the received seed is hereby denoted by »userHash«.

In the following the computed hash value »userHash«, the public key certificate and the signature »userSignature« are verified with respective credentials provided by the server.

The computed hash value »userHash« as above has to be identical with the hash received from the device DVC. Applying an RSA-PKCS#1 verify function using the public certificate or »pubCert« from the user, the server can verify whether the signature is the same as the computed userHash. Thus, if the result of decoding the signature with the public certificate is identical with the value as the hash by the device DVC, the usage of the corresponding private key for the signature is verified:

$$authorized = verify(pubCert, userHash, userSignature)$$

By proofing a user as authorized the server verifies a usage of the smart card and the PIN assigned to the smart card. The two-factor authentication is successful. Then, an authentication message is transmitted to said device if the step of verifying delivers a positive result. The server returns the resource requested by the device DVC and establishes a corresponding HTTPs session.

If, however, the step of verifying delivers a negative result, the authentication was not successful. The server then returns a HTTP status code 401.

The proposed method advantageously makes use of a standard HTTP authentication challenge methods in combination with standard encryption algorithms in order to arrive at a new challenge response method which is able to use existing application program interfaces (API) of current operating systems for mobile devices, including iOS developed by Apple Inc., Cupertino, California, United States of America.

The proposed method advantageously enables a two factor-authentication applying the protocol HTTPs by using a smart card. This advantageously facilitates a usage of existing PKI infrastructure on mobile devices.

Embodiments of the invention can be implemented in computing hardware (computing apparatus) and/or software, including but not limited to any computer or microcomputer that can store, retrieve, process and/or output data and/or communicate with other computers.

The invention has been described in detail with particular reference to preferred embodiments thereof and examples, but it will be understood that variations and modifications can be effected within the spirit and scope of the invention covered by the claims.

**Claims**

1. A method for authenticating a user of a device against a server by using credentials assigned to said user, said credentials including at least a public certificate and a private key, said credentials stored by an authentication controller being at least temporarily interfaced to said device, the method including the steps of:

   a) receiving, by said device, an authentication request issued by said server, said authentication request at least including a challenge;
   b) computing, by said device, a hash value of said challenge and transmitting said hash value to said authentication controller;
   c) requesting, by said device, said authentication controller to compute a signature by signing said hash value with said private key and receiving said signature from said authentication controller;
   d) composing, by said device, a first string by encoding said signature;
   e) reading, by said device, said public key certificate from said authentication controller and composing a second string by encoding said public key certificate;
   f) composing a response answering said authentication request, by using a response format including a string literal dedicated for a concatenation of a username string and a password string and inserting a concatenation of said first string and said second string into said string literal; and;
   g) transmitting said response to said server.

2. Method according to claim 1, said authentication request including a string characterizing a realm.

3. Method according to claim 1, said challenge included in said authentication request being encoded.

4. Method according to claim 1, said hash value being computed by a concatenation of said challenge and a seed.

5. Method according to claim 1, said signature being computed by applying a PKCS#1 algorithm.

6. Method according to according to claim 1, said first string being composed by encoding said seed and by concatenating said encoded seed with said encoded signature.

7. A method for authenticating a user of a device against a server, including the steps of:

   a) receiving, by said server, a response sent by said device, said response responsively sent to a preceding authentication request;
   b) identifying a string literal included in said response, said string literal dedicated for a concatenation of a username string and a password string;
   c) decomposing said string literal into a first string and a second string;
   d) extracting a hash value of a challenge, a public key certificate and a signature from one of said first string or second string;
   e) verifying said hash value, said public key certificate and said signature with respective credentials provided by the server; and;
   f) transmitting an authentication message to said device if said step of verifying delivers a positive result.

8. A device supporting an authentication of a user against a server by using credentials assigned to said user, said credentials including at least a public certificate and a private key, said credentials stored by an authentication controller being at least temporarily interfaced to said device, the device including:

   a) means for receiving an authentication request issued by said server, said authentication request at least including a challenge;
   b) means for computing a hash value of said challenge and for transmitting said hash value to said authentication controller;
   c) means for requesting said authentication controller to compute a signature by signing said hash value with said private key and receiving said signature from said authentication controller;
   d) means for composing a first string by encoding said signature;
   e) means for reading said public key certificate from said authentication controller and for composing a second string by encoding said public key certificate;
   f) means for composing a response answering said authentication request, by using a response format including a string literal dedicated for a concatenation of a username string and a password string and inserting a concatenation of said first string and said second string into said string literal; and;
g) means for transmitting said response to said server.

| AUT | DVC | SRV |
|-----|-----|-----|

```
                    100  →  110
                              ↓
              130  ←  120
               ↓
   150  ←  140
    ↓
   160  →  170
               ↓
   190  ←  180
    ↓
   200  →  210  →  220
                     ↓
              240  ←  230
```

FIG

Europäisches
Patentamt

European
Patent Office

Office européen
des brevets

**EUROPEAN SEARCH REPORT**

Application Number

EP 13 18 6598

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/049975 A1 (PARNO BRYAN [US] ET AL) 25 February 2010 (2010-02-25) * abstract * * paragraphs [0001] - [0026], [0046] - [0071] * * figures 1-4B * | 1-8 | INV. H04L9/32 H04L29/06 |
| X | US 2002/133467 A1 (HOBSON CAROL LEE [US] ET AL) 19 September 2002 (2002-09-19) * abstract * * paragraphs [0002] - [0012], [0033] - [0064] * * figures 1-5 * | 1-8 | |
| A | WO 2012/129503 A1 (INTERDIGITAL PATENT HOLDINGS [US]; CHA INHYOK [KR]; GUCCIONE LOUIS J []) 27 September 2012 (2012-09-27) * the whole document * | 1-8 | |
| | | | TECHNICAL FIELDS SEARCHED (IPC) |
| | | | H04L G06Q H04W |

The present search report has been drawn up for all claims

| Place of search | Date of completion of the search | Examiner |
|---|---|---|
| Munich | 31 January 2014 | Mariggis, Athanasios |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

EP 2 854 331 A1

## ANNEX TO THE EUROPEAN SEARCH REPORT
## ON EUROPEAN PATENT APPLICATION NO.

EP 13 18 6598

This annex lists the patent family members relating to the patent documents cited in the above-mentioned European search report.
The members are as contained in the European Patent Office EDP file on
The European Patent Office is in no way liable for these particulars which are merely given for the purpose of information.

31-01-2014

| Patent document cited in search report | | Publication date | Patent family member(s) | | Publication date |
|---|---|---|---|---|---|
| US 2010049975 | A1 | 25-02-2010 | NONE | | |
| US 2002133467 | A1 | 19-09-2002 | AU | 2002239473 A1 | 03-10-2002 |
| | | | US | 2002133467 A1 | 19-09-2002 |
| | | | US | 2008010217 A1 | 10-01-2008 |
| | | | US | 2008010220 A1 | 10-01-2008 |
| | | | US | 2008052183 A1 | 28-02-2008 |
| | | | US | 2009157528 A1 | 18-06-2009 |
| | | | US | 2009157554 A1 | 18-06-2009 |
| | | | US | 2009157556 A1 | 18-06-2009 |
| | | | US | 2009157557 A1 | 18-06-2009 |
| | | | WO | 02075478 A2 | 26-09-2002 |
| WO 2012129503 | A1 | 27-09-2012 | CN | 103460738 A | 18-12-2013 |
| | | | EP | 2689599 A1 | 29-01-2014 |
| | | | TW | 201246890 A | 16-11-2012 |
| | | | US | 2013080769 A1 | 28-03-2013 |
| | | | WO | 2012129503 A1 | 27-09-2012 |

EPO FORM P0459

For more details about this annex : see Official Journal of the European Patent Office, No. 12/82